# EUROPEAN PATENT APPLICATION

(11) **EP 1 265 084 A1**
(43) Date of publication of application: **11.12.2002**
(21) Application number: 01440163.2
(22) Date of filing: 08.06.2001
(51) Int. Cl.: G02B 6/12, G02B 6/34

(54) **Athermalization of integrated optical component**

(71) Applicant: ALCATEL, 75008 Paris (FR)
(72) Inventor: Satzke, Klaus, Dr., 70806 Kornwestheim (DE)
(74) Representative: Brose, Gerhard

(57) **Abstract**

The basic idea of the present invention consists of providing an athermalized waveguide by taking advantage in comparison with the waveguide (1) itself of a different temperature dependency from a cladding layer (3) made of e.g. polymer without being penalized by subsidiary effects. The insertion of an additional coating layer (4) in between the cladding layer (3) and the waveguide (1) in accordance with the present invention limits among other things an overlap of a mode field with said cladding layer when present in the waveguide.

## Description

The present invention relates to an optical module as set forth in the preamble of claim 1.

Optical waveguides implemented in optical modules for e.g. phased array (PHASAR), star or tap couplers are obtained usually by doping a core layer with specific donors. This core layer is applied on a buffer layer, the latter made of e.g. silicate (SᵢO₂) is growth usually by oxidation under high pressure over a substrate (Si). Such buffer layer isolates the core layer from the substrate which shows a very high refractive index. The optical waveguides are structured by dry etching in the core layer and later on coated with a cladding layer of a thickness of several µm usually made of a doped silicate glass.

Ideally, the operation of optical modules with such kind of optical waveguides should be predictable and consistent over a wide range of environmental conditions. Unfortunately however, in practice, the operational performance of such devices is significantly affected by variations in the temperature of the environment surrounding the device. More specifically, the wavelength spectrum of such kind of existing optical module designs shifts with temperature (T) for at least two reasons. First, dn/dT, where n represents the refractive index of the waveguide material, does not equal zero and secondly, the thermal expansion, i.e. dL/dT, where L represents length, likewise does not equal zero.

Nowadays, some techniques used to create optical modules that are less sensitive to temperature changes use a heater or a mechanical control arrangement for application of strain depending of the temperature. Unfortunately, such a design increases the complexity and the size of such an optical module while decreasing its mechanical stability. On top of that, it may even not be applicable particularly for the heater where electrical power is not readily available.

An alternative exists already by replacing the silica cladding layer by e.g. a polymer material with large negative refractive index coefficient, resulting in athermalization of the component by compensation of the thermal coefficient. In US6,137,939 a waveguide grating router (WGR) with reduced temperature-related spectrum shifts is disclosed, where precisely the athermalization is obtained by replacing sections of the core regions with polymer. Those sections have refractive index decreasing as temperature increases in contrary of the property of the rest of the waveguide such that a compensation may occur.

But these solutions show also some drawbacks since the optical waveguides have to be interrupted, resulting in reliability problems at the interfaces. Critical interfaces between silica waveguides and polymer material as well as possible free-space propagation in the inserted polymer material result in enhanced loss partly due to mode-mismatch at the receiving polymer/silica interface. Post-processing steps required for polymer insertion results in increased complexity of the fabrication process.

It is an object of the present invention to develop optical modules with optical waveguides which show an almost athermal behavior while being still relatively cheap to manufacture.

This object is attained by an optical module as claimed in claim 1.

The basic idea of the present invention consists of taking advantage in comparison with the waveguide itself of a different temperature dependency from a cladding layer made of e.g. polymer without being penalized by subsidiary effects. Indeed, the insertion of an additional coating layer in between the cladding layer and the waveguide in accordance with the present invention limits among others an overlap of a mode field with said cladding layer when present in the waveguide. No interruption or change of cross section of the waveguide itself must be designed. On top of that, such additional coating layer shall not necessarily be structured but can simply be deposited over the waveguide already structured into the core layer. Advantageously, a structure characterized by an additional coating layer in accordance with the present invention may be combined with further means for reducing a possibly existing residual birefringence of the optical waveguide.

Further advantageous features of the invention are defined in the dependent claims and will become apparent form the following description and the drawing.

One embodiment of the invention will now be explained in more detail with reference to the accompanying drawing, in which:
- Figures 1a and 1b: are cross sections of optical waveguides as known from prior art,
- Figure 2: discloses a cross section of an optical waveguide according to the invention,
- Figures 3a and 3b: are graphs of the central channel wavelength according to the temperature for two different structures according to the invention.

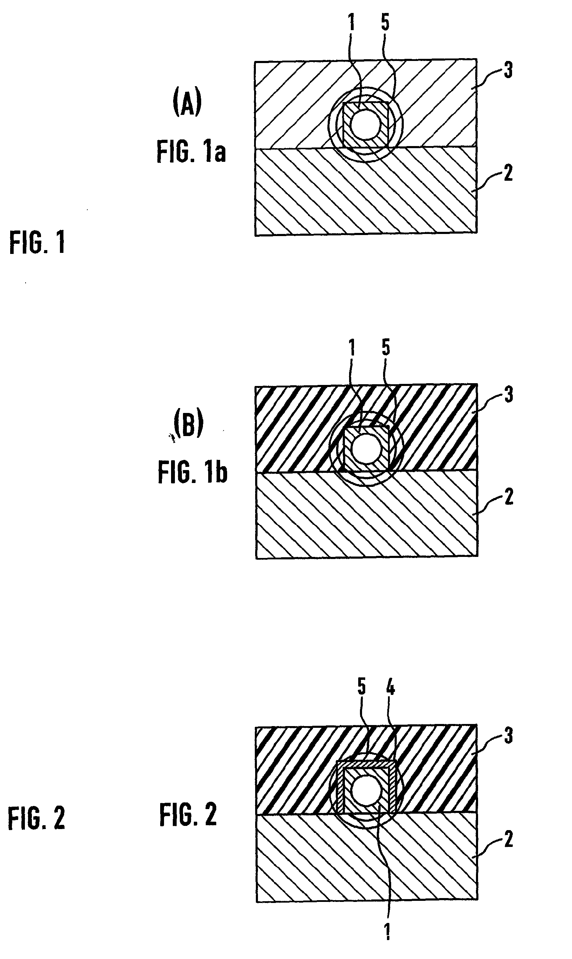

Figures 1a and 1b represent cross sections of two different waveguides as known from prior art. In both cases, an optical waveguide 1 is structured as usual in a core layer e.g. by dry etching over a buffer layer 2, later on being coated by a cladding layer 3. The buffer as well as the core layer are made of silica (SiO₂), the latter being doped in a specific way to permit to structure a specific optical waveguide. The cladding layer 3 is also made of silica in the case of figure 1a leading to an optical waveguide 1 of refractive index with positive temperature coefficient. In contrast, the cladding layer 3 in the case of figure 1 b is made of a polymer leading to an optical waveguide 1 of refractive index with negative temperature coefficient.

In both cases of a cladding layer of silica or polymer, the resulting optical waveguide 1 does not show a behavior independent of the temperature, so that an essential condition for a safe in-field running is not fulfilled.

In figure 2 a cross section of an optical waveguide 1 according to the present invention is shown. Said optical waveguide 1 is structured over a buffer layer 2 of silica in a core layer of silica, doped in a specific way. Before being coated by a cladding layer 3 made here of a polymer, an additional coating layer 4 is deposited over the already structured optical waveguide 1. Said additional coating layer 4 may be made of SiO2 deposited by Plasma Enhanced Chemical Vapour Deposition (PECVD). The present invention is not restricted to the material composition of the different layers as cited before. It is mainly based on the characteristic of the presence of said additional coating layer 4, which is chosen such that it at least partly compensates a temperature dependence of said optical waveguide 1. Therefore, the thickness of said additional coating layer may vary according to its composition and consequently its refractive index.

Furthermore, a mode field 5 present in an optical waveguide according to the invention will no more overlap that much into the cladding layer 3. This will enable to achieve to obtain a temperature independent optical waveguide or an optical waveguide with minor temperature dependence.

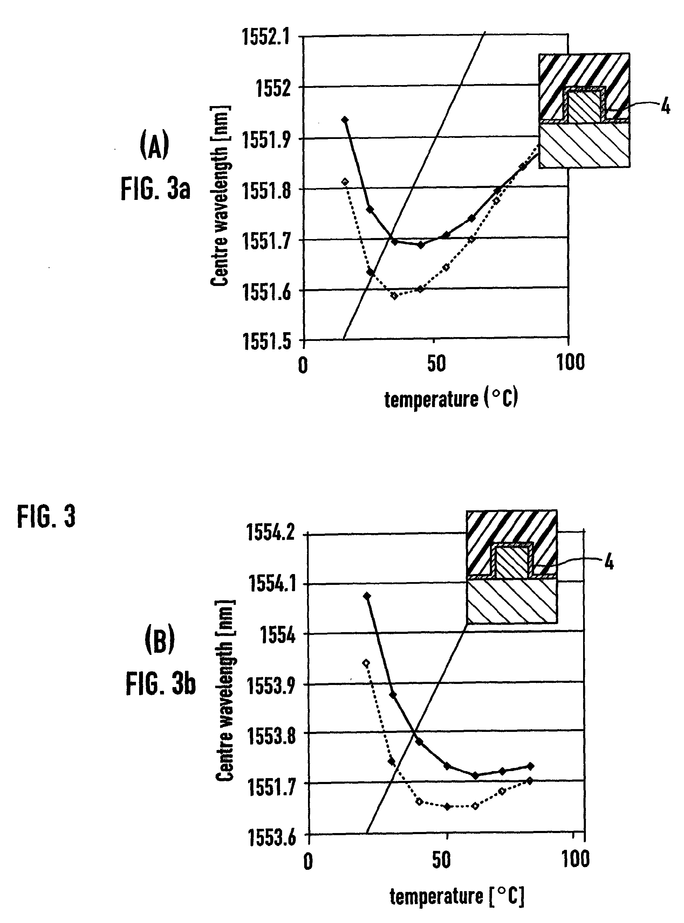

In figures 3a and 3b are shown typical temperature dependences for the centre wavelength λ₀=n_{eff}ΔL/m, (n_{eff}, ΔL and m are the effective index of the waveguide, the waveguide path difference and the diffraction order respectively) transmitted through an optical waveguide of a PHASAR coated respectively by two different additional cladding layers according to the invention. The advantage of said additional coating layer is demonstrated by comparing the central channel wavelength of a standard PHASAR (continuous linear increasing curve) with the one according to the invention. Latter is evaluated in polarization resolved transmission measurement. Therefore, both the transverse electric TE (gray, lower curve) and the transverse magnetic mode (black, upper curve) are shown on each figure.

Figure 3a corresponds to the case of an additional coating layer 4 made of a low index PECVD silica layer. Latter has a refractive index at 1.55µm of about 1.447 and its thickness is about 0.25µm. Figure 3b corresponds to the case of an additional coating layer 4 made of a high index PECVD silica layer. Latter has a refractive index at 1.55µm of about 1.458 and its thickness is about 0.72µm. Such comparisons show clearly that the usual linear increase of CWL according to the temperature is really modified. A temperature range of at least few decades °C can be obtained where an optical waveguide according to the invention will have almost temperature independent behavior.

It may be of interest to design an optical module with optical waveguides according to the present invention combining some means reducing a residual birefringence possibly present in the optical waveguide. This will allow in some case to optimize the athermalization of the optical waveguides. Such means for compensating the birefringence may be given, e.g. by the use of a TE/TM converter with a λ/2 waveplate in the center of the PHASAR region. But other solutions could also be advantageously applied.

## Claims

1. Optical module containing optical waveguide (1) structured in a core layer laid on a buffer (2) while said optical waveguide is coated by a cladding layer (3) **characterized in, that** an additional coating layer (4) is present between said optical waveguide (1) and said cladding layer (3) at least partly compensating a temperature dependence of said optical waveguide.

2. Optical module according to claim 1, **characterized in, that** said additional coating layer (4) shows a positive temperature coefficient and suitable refractive index reducing an overlap of a mode field (5) with said cladding layer (3) when said mode field (5) is present in said optical waveguide (1).

3. Optical module according to claim 1 or 2, **characterized in, that** said core layer and said cladding layer (3) are made respectively of silica and polymer.

4. Optical module according to one of the claims 1 to 3, **characterized in, that** said additional coating layer (4) is made of silica.

5. Optical module according to one of the claims 1 to 4, **characterized in, that** it comprises further means for reducing a residual birefringence of said optical waveguide
